# EUROPÄISCHE PATENTSCHRIFT

(11) **EP 3 918 522 B1**
(45) Veröffentlichungstag und Bekanntmachung des Hinweises auf die Patenterteilung: **05.06.2024**
(21) Anmeldenummer: 19717266.1
(22) Anmeldetag: 08.04.2019
(51) Int. Cl.: G06K 19/077, H01Q 1/22, B60C 23/04, B60C 19/00

(54) **ELEKTROMAGNETISCH WIRKENDE SENDE- UND EMPFANGSVORRICHTUNG**
ELECTROMAGNETIC TRANSCEIVER DEVICE
DISPOSITIF ÉMETTEUR-RÉCEPTEUR ÉLECTROMAGNÉTIQUE

(30) Priorität: 28.01.2019 DE 102019201052
(43) Veröffentlichungstag der Anmeldung: 08.12.2021
(73) Patentinhaber: Continental Reifen Deutschland GmbH, 30175 Hannover (DE)
(72) Erfinder: KURZ, Martin, 30161 Hannover (DE); HAUPTVOGEL, Jürgen, 30165 Hannover (DE); EHMKE, Tobias, 30165 Hannover (DE); HADARIG, Andreea, 30165 Hannover (DE); BUCHHOLZ, Arne, 30165 Hannover (DE)
(74) Vertreter: Continental Corporation
(86) Internationale Anmeldenummer: PCT/EP2019/058755
(87) Internationale Veröffentlichungsnummer: WO 2020/156687

(56) Entgegenhaltungen:
- EP-A1- 0 736 926
- EP-B1- 0 736 926
- WO-A1-99/29522
- US-A1- 2010 277 395

## Beschreibung

Die Erfindung betrifft eine elektromagnetische Sende- und Empfangsvorrichtung und einen Reifen.

Die Erfindung geht aus von einer elektromagnetischen Sende- und Empfangsvorrichtung, aufweisend eine Speicherkomponente und mindestens eine Antenne. Insbesondere kann die elektromagnetische Sende- und Empfangsvorrichtung zwei oder mehr Antennen aufweisen.

Bei der elektromagnetischen Sende- und Empfangsvorrichtung handelt es sich insbesondere um eine RFID-Vorrichtung. RFID steht für Radio Frequency Identification und bedeutet Identifizierung mit Hilfe elektromagnetischer Wellen.

Aus dem Stand der Technik sind elektromagnetische Sende- und Empfangsvorrichtungen für Reifen bekannt. Beispielsweise wird in der EP2223814B1 eine elektromagnetische Sende- und Empfangsvorrichtung offenbart.

Beispielsweise wird auch in der WO 99/29522 A1 eine elektrische Sende- und Empfangsvorrichtung offenbart, wobei die elektromagnetische Sende- und Empfangsvorrichtung eine Speicherkomponente und mindestens eine Antenne aufweist.

Ferner werden in der EP0736926A1 und in der US 2010277395 A1 elektromagnetische Sende- und Empfangsvorrichtungen offenbart.

Bei den aus dem Stand der Technik bekannten elektromagnetischen Sende- und Empfangsvorrichtungen, könnte es erforderlich sein, technologisch aufwändige Antennenkonstruktionen bereitzustellen, um einen zuverlässigen und ausreichenden Datentransfer oder Signaltransfer zwischen der elektromagnetischen Sende- und Empfangsvorrichtung und einer weiteren Vorrichtung zu ermöglichen.

Der Erfindung liegt daher die Aufgabe zugrunde, eine verbesserte elektromagnetische Sende- und Empfangsvorrichtung für einen Reifen bereitzustellen, bei der die Antenne insbesondere aufwandsgeringer und technologisch vorteilhafter bereitgestellt werden kann.

Gelöst wird die erfindungsgemäße Aufgabe dadurch, dass die mindestens eine Antenne aus CuSn6 und/oder CuMg ausgebildet ist.

CuSn6 ist eine Legierung mit folgenden Massenanteilen in Prozent 0,01 % bis 0,4 % Phosphor, 5,5 % bis 7% Zinn, Rest bis 100 % Kupfer. Die prozentualen Bestandteile von Phosphor, Zinn und Kupfer addieren sich zu je 100 %. Insbesondere können aber bis zu 0,2% Nickel und/oder bis zu 0,2% Zink und/oder bis zu 0,1% Eisen und/oder bis zu 0,02% Blei Beimengungen der Legierung sein, wobei sich die Massenanteile mit Phosphor, Zinn und Kupfer wie vorstehend für CuSn6 beschrieben jeweils auf 100 % addieren. Die Massenangaben beziehen sich jeweils auf die Gesamtmasse der Legierung. Insbesondere können aber auch 0,01% bis 0,2% Nickel und/oder 0,01% bis 0,2% Zink und/oder 0,01 % bis 0,1% Eisen und/oder 0,01 % bis 0,02% Blei Beimengungen der Legierung sein, wobei sich die Massenanteile mit Phosphor, Zinn und Kupfer wie vorstehend für CuSn6 beschrieben jeweils auf 100 % addieren. Die Massenangaben beziehen sich jeweils auf die Gesamtmasse der Legierung.

CuMg ist eine Legierung mit folgenden Massenanteilen in Prozent: 0,09 % bis 0,6 % Magnesium, Rest bis 100 % Kupfer. Die prozentualen Bestandteile von Magnesium und Kupfer addieren sich zu 100 %. Insbesondere können aber bis zu 0,3% Nickel und/oder bis zu 0,1% Eisen und/oder bis zu 0,1% Blei und/oder bis zu 0,1% Zinn und/oder bis zu 0,05% Aluminium Beimengungen der Legierung sein, wobei sich die Massenanteile mit Magnesium und Kupfer wie vorstehend für CuMg beschrieben jeweils auf 100 % addieren. Die Massenangaben beziehen sich jeweils auf die Gesamtmasse der Legierung. Insbesondere können aber auch 0,01% bis 0,3% Nickel und/oder 0,01 % bis 0,1% Eisen und/oder 0,01 % bis 0,1% Blei und/oder 0,01 % bis 0,1% Zinn und/oder 0,01 % bis 0,05% Aluminium Beimengungen der Legierung sein, wobei sich die Massenanteile mit Magnesium und Kupfer wie vorstehend für CuMg beschrieben jeweils auf 100 % addieren. Die Massenangaben beziehen sich jeweils auf die Gesamtmasse der Legierung.

Durch den erfindungsgemäßen Umstand, wonach die mindestens eine Antenne aus CuSn6 und/oder CuMg ausgebildet ist, wird eine Antenne aus Materialien bereitgestellt, die aufwandsgering zu einer Antenne verarbeitet werden können, die preisgünstig sind und die insbesondere in einem Frequenzband von 800 MHz bis 1000 MHz eine ausreichende Sende- und Empfangsleistung der elektromagnetischen Sende- und Empfangsvorrichtung sicherstellen.

Somit wird eine verbesserte elektromagnetische Sende- und Empfangsvorrichtung bereitgestellt.

Die Erfindung betrifft ferner einen Reifen, wobei der Reifen um eine Rotationsachse in eine Umlaufrichtung rotierbar ist, aufweisend mindestens eine erfindungsgemäße elektromagnetische Sende- und Empfangsvorrichtung.

Bei dem Reifen handelt es sich um einen Fahrzeugreifen.

Weitere vorteilhafte Ausgestaltungsformen der vorliegenden Erfindung sind Gegenstand der Unteransprüche.

Gemäß einer vorzugsweisen Ausgestaltungsform der Erfindung ist die mindestens eine Antenne drahtförmig und weist einen weitestgehend kreisförmigen Querschnitt auf. Der weitestgehend kreisförmige Querschnitt weist einen Durchmesser von 0,15 mm bis 0,45 mm oder 0,19 mm bis 0,4 mm und insbesondere 0,22 mm oder 0,28 mm auf.

Gemäß einer nächsten vorzugsweisen Ausgestaltungsform der Erfindung folgt die mindestens eine Antenne der Form einer Helix. Die Helix windet sich dabei um einen Mantel eines im Wesentlichen zylinderförmigen Innenvolumens mit kreisförmigem Querschnitt. Die Windung erfolgt insbesondere mit konstanter Steigung.

Gemäß einer nächsten vorzugsweisen Ausgestaltungsform der Erfindung beträgt eine Erstreckungslänge der Helix 13 mm bis 30 mm und insbesondere 13 mm bis 25 mm. Die Erstreckungslänge kann auch als Helixlänge bezeichnet werden. Die Erstreckungslänge entspricht der räumlichen Ausdehnung der Helix. Für den Fall, wonach die Helix ein zylinderförmiges Innenvolumen einschließt, entspricht die Erstreckungslänge der Längsachse oder Höhe des Zylinders.

Gemäß einer nächsten vorzugsweisen Ausgestaltungsform der Erfindung beträgt ein Durchmesser der Helix 0,9 mm bis 1,9 mm oder 1,2 mm bis 1,36 mm oder 1,05 mm bis 1,35 mm. Der Durchmesser der Helix kann auch als Helixdurchmesser bezeichnet werden, wobei es sich bei diesem Helixdurchmesser um den Außendurchmesser der Helix handelt. Für den Fall, wonach die Helix ein zylinderförmiges Innenvolumen mit kreisförmigem Querschnitt einschließt, liegt der Durchmesser der Helix koplanar zu dem Durchmesser des kreisförmigen Querschnitts.

Der Durchmesser der Helix liegt rechtwinklig zu der Erstreckungslänge der Helix.

Gemäß einer nächsten vorzugsweisen Ausgestaltungsform der Erfindung beträgt eine Anzahl von Wicklungen der Helix entlang einer Wicklungsachse der Helix 10 bis 16 je 10 mm Wicklungslänge der Helix. Die Wicklungsachse liegt auf der Achse der Erstreckungslänge der Helix. Die Helix kann durch eine Schraubenfunktion oder Helixfunktion beschrieben werden. Die Richtung, in die sich die Helix ausdehnt, liegt parallel zu der Wicklungsachse. Die Wicklungslänge bezeichnet die Ausdehnung oder Länge, um die herum sich die Helix entlang der Wicklungsachse um ein Vielfaches von 360° um die Wicklungsachse windet. Die Wicklungslänge einer vollen Umdrehung um 360° kann mathematisch auch als Ganghöhe der Helix bezeichnet werden. Erfindungsgemäß kann eine Anzahl von Wicklungen der Helix entlang einer Wicklungsachse der Helix insbesondere 6 bis 16 je 10 mm Wicklungslänge der Helix oder 6 bis 10 je 10 mm Wicklungslänge der Helix oder 10 bis 16 je 10 mm Wicklungslänge der Helix betragen.

Gemäß einer nächsten vorteilhaften Ausführungsform der Erfindung ist mindestens eine Sensorkomponente mit der Speicherkomponente verbunden. Dabei ist die mindestens eine Sensorkomponente zur Erfassung einer physikalischen Zustandsgröße vorgesehen. Anhand der Zustandsgröße kann auf einen Zustand eines Reifens geschlossen werden. Bei dem Reifen handelt es sich um einen solchen Reifen, in dem die erfindungsgemäße elektromagnetische Sende- und Empfangsvorrichtung verwendet wird. Bei der Zustandsgröße kann es sich vorzugsweise um einen Druck oder um eine Temperatur, die im Inneren des Reifens herrschen, handeln.

Weitere Merkmale, Vorteile und Einzelheiten, auf die die Erfindung in ihrem Umfang aber nicht beschränkt ist, werden nun anhand der Zeichnungen näher beschrieben.

Es zeigt:
Fig. 1: Eine schematische Darstellung einer erfindungsgemäßen elektromagnetischen Sende- und Empfangsvorrichtung;
Fig. 2: eine schematische Darstellung einer erfindungsgemäßen elektromagnetischen Sende- und Empfangsvorrichtung gemäß einer Ausführungsform;
Fig. 3: eine schematische Darstellung einer erfindungsgemäßen elektromagnetischen Sende- und Empfangsvorrichtung gemäß einer Ausführungsform;
Fig. 4: eine schematische Darstellung einer erfindungsgemäßen elektromagnetischen Sende- und Empfangsvorrichtung gemäß einer Ausführungsform;
Fig. 5: eine schematische Darstellung einer erfindungsgemäßen elektromagnetischen Sende- und Empfangsvorrichtung gemäß einer Ausführungsform;
Fig. 6: eine schematische Darstellung eines erfindungsgemäßen Reifens.

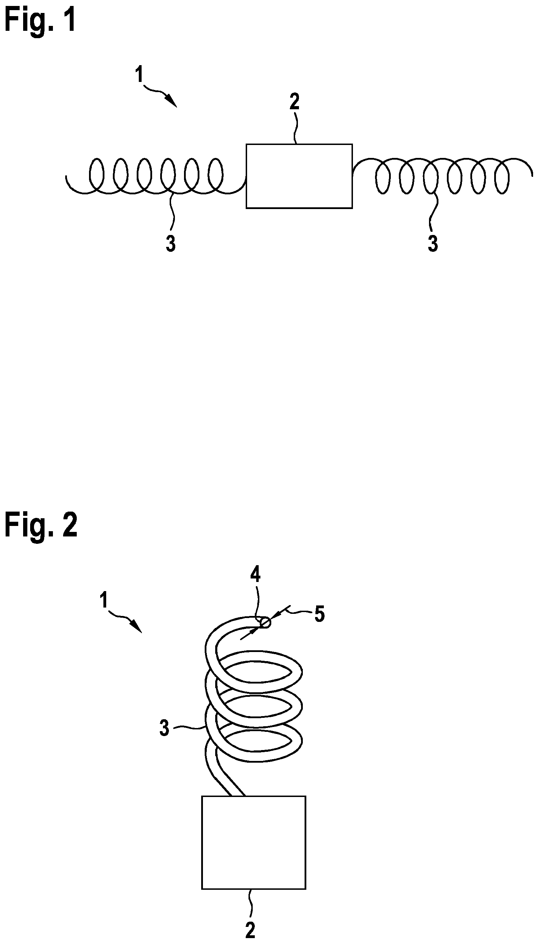

In der Figur 1 ist eine elektromagnetische Sende- und Empfangsvorrichtung 1 für einen Reifen schematisch dargestellt. Die elektromagnetische Sende- und Empfangsvorrichtung 1 weist mindestens eine Speicherkomponente 2 und mindestens eine Antenne 3 auf.

Die mindestens eine Antenne 3 ist aus CuSn6 und/oder CuMg ausgebildet.

Gemäß der Darstellung in der Figur 1 weist die elektromagnetische Sende- und Empfangsvorrichtung 1 zwei Antennen 3 auf.

In der Figur 2 ist eine elektromagnetische Sende- und Empfangsvorrichtung 1 für einen Reifen gemäß einer Ausführungsform schematisch dargestellt. Gemäß der Darstellung in der Figur 2 ist die mindestens eine Antenne 3 drahtförmig und weist einen weitestgehend kreisförmigen Querschnitt 4 auf. Der weitestgehend kreisförmige Querschnitt 4 weist einen Durchmesser 5 von 0,15 mm bis 0,45 mm auf.

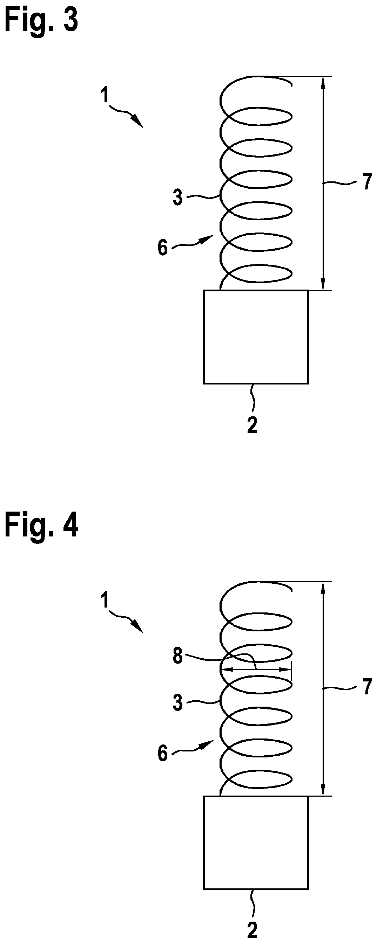

In der Figur 3 ist eine elektromagnetische Sende- und Empfangsvorrichtung 1 für einen Reifen gemäß einer weiteren Ausführungsform schematisch dargestellt. Gemäß der Darstellung in der Figur 3 folgt die mindestens eine Antenne 3 einer Form einer Helix 6. Dabei beträgt eine Erstreckungslänge 7 der Helix 6 insbesondere 13 mm bis 25 mm.

In der Figur 4 ist eine elektromagnetische Sende- und Empfangsvorrichtung 1 für einen Reifen gemäß einer weiteren Ausführungsform schematisch dargestellt. Gemäß der Darstellung in der Figur 4 beträgt ein Durchmesser 8 der Helix 6 0,9 mm bis 1,9 mm. Gemäß der Darstellung in der Figur 4 liegt der Durchmesser 8 rechtwinklig zu der Erstreckungslänge 7.

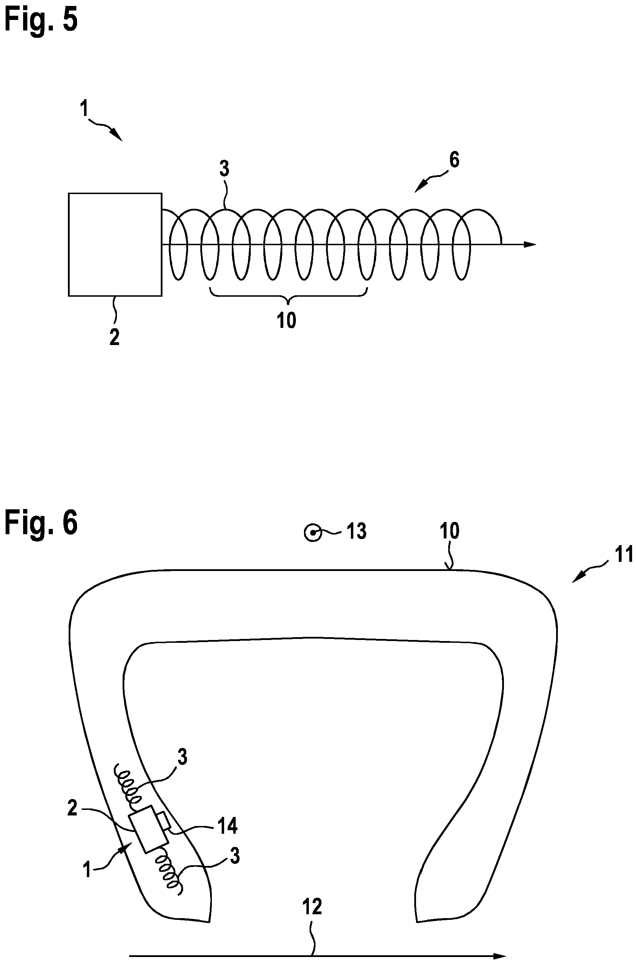

In der Figur 5 ist eine elektromagnetische Sende- und Empfangsvorrichtung 1 für einen Reifen gemäß einer weiteren, beispielhaften Ausführungsform schematisch dargestellt. Gemäß der Darstellung in der Figur 5 beträgt eine Anzahl von Wicklungen der Helix 6 entlang einer Wicklungsachse 9 der Helix 6 sechs je 10 mm Wicklungslänge 10 der Helix 6; dies bedeutet sechs Wicklungen der Helix 6 je 10 mm Wicklungslänge 10 der Helix 6. Eine Wicklung entspricht insbesondere einer Windung um 360° der Helix um die Wicklungsachse herum.

In der Figur 6 ist ein erfindungsgemäßer Reifen 11 schematisch in Radialschnittansicht dargestellt. Der Reifen 11 ist um eine Rotationsachse 12 in eine Umlaufrichtung 13 rotierbar. Der Reifen 11 weist mindestens eine elektromagnetische Sende- und Empfangsvorrichtung 1 auf.

Ferner ist insbesondere und gemäß der Darstellung in der Figur 6 mindestens eine Sensorkomponente 14 mit der Speicherkomponente 2 verbunden, wobei die mindestens eine Sensorkomponente 14 zur Erfassung einer physikalischen Zustandsgröße vorgesehen ist. Anhand dieser Zustandsgröße kann auf einen Reifenzustand geschlossen werden.

Die in der Figur 6 dargestellte Ausführungsform stellt eine beispielhafte Anordnung der mindestens einen elektromagnetischen Sende- und Empfangsvorrichtung 1 im Reifen 1 dar. Die mindestens eine elektromagnetische Sende- und Empfangsvorrichtung 1 kann an einer beliebigen Stelle innerhalb des Reifens 1 angeordnet werden.

### Bezugszeichenliste

- 1: Elektromagnetische Sende- und Empfangsvorrichtung
- 2: Speicherkomponente
- 3: Antenne
- 4: Querschnitt
- 5: Durchmesser
- 6: Helix
- 7: Erstreckungslänge
- 8: Durchmesser der Helix
- 9: Wicklungsachse
- 10: Wicklungslänge
- 11: Reifen
- 12: Rotationsachse
- 13: Umlaufrichtung
- 14: Sensorkomponente

## Patentansprüche

1. Reifen (11), wobei der Reifen (11) um eine Rotationsachse (12) in eine Umlaufrichtung (13) rotierbar ist, aufweisend mindestens eine elektromagnetische Sende- und Empfangsvorrichtung (1), aufweisend eine Speicherkomponente (2) und mindestens eine Antenne (3), **dadurch gekennzeichnet, dass** die mindestens eine Antenne (3) aus CuSn6 und/oder CuMg ausgebildet ist.

2. Reifen (11) nach Anspruch 1, **dadurch gekennzeichnet, dass** die mindestens eine Antenne (3) drahtförmig ist und einen weitestgehend kreisförmigen Querschnitt (4) aufweist, wobei der weitestgehend kreisförmige Querschnitt (4) einen Durchmesser (5) von 0,15 mm bis 0,45 mm aufweist.

3. Reifen (11) nach Anspruch 1 oder 2, **dadurch gekennzeichnet, dass** die mindestens eine Antenne (3) der Form einer Helix (6) folgt.

4. Reifen (11) nach dem vorhergehenden Anspruch, **dadurch gekennzeichnet, dass** eine Erstreckungslänge (7) der Helix (6) 13 mm bis 30 mm beträgt.

5. Reifen (11) nach einem der Ansprüche 3 oder 4, **dadurch gekennzeichnet, dass** ein Durchmesser (8) der Helix (6) 0,9 mm bis 1,9 mm beträgt.

6. Reifen (11) nach einem der vorhergehenden Ansprüche, **dadurch gekennzeichnet, dass** eine Anzahl von Wicklungen der Helix (6) entlang einer Wicklungsachse (9) der Helix (6) 10 bis 16 je 10 mm Wicklungslänge (10) der Helix (6) beträgt.

7. Reifen (11) nach einem der vorhergehenden Ansprüche, **dadurch gekennzeichnet, dass** mindestens eine Sensorkomponente (14) mit der Speicherkomponente (2) verbunden ist, wobei die mindestens eine Sensorkomponente (14) zur Erfassung einer physikalischen Zustandsgröße vorgesehen ist.

## Claims

1. Tyre (11), wherein the tyre (11) is rotatable in a circumferential direction (13) about an axis of rotation (12), comprising at least one electromagnetic transmitting and receiving apparatus (1), comprising a storage component (2) and at least one antenna (3), **characterized in that** the at least one antenna (3) is formed from CuSn6 and/or CuMg.

2. Tyre (11) according to Claim 1, **characterized in that** the at least one antenna (3) is in wire form and has a substantially circular cross section (4), the substantially circular cross section (4) having a diameter (5) of 0.15 mm to 0.45 mm.

3. Tyre (11) according to Claim 1 or 2, **characterized in that** the at least one antenna (3) follows the shape of a helix (6).

4. Tyre (11) according to the preceding claim, **characterized in that** a length of extent (7) of the helix (6) is 13 mm to 30 mm.

5. Tyre (11) according to either of Claims 3 and 4, **characterized in that** a diameter (8) of the helix (6) is 0.9 mm to 1.9 mm.

6. Tyre (11) according to one of the preceding claims, **characterized in that** a number of windings of the helix (6) along a winding axis (9) of the helix (6) is 10 to 16 per 10 mm of winding length (10) of the helix (6).

7. Tyre (11) according to one of the preceding claims, **characterized in that** at least one sensor component (14) is connected to the storage component (2), the at least one sensor component (14) being provided to record a physical state variable.

## Revendications

1. Pneu (11), le pneu (11) pouvant tourner autour d'un axe de rotation (12) dans un sens de rotation (13), possédant au moins un dispositif d'émission et de réception électromagnétique (1), possédant un composant de mémoire (2) et au moins une antenne (3), **caractérisé en ce que** l'au moins une antenne (3) est réalisée en CuSn6 et/ou en CuMg.

2. Pneu (11) selon la revendication 1, **caractérisé en ce que** l'au moins une antenne (3) est filiforme et présente une section transversale (4) sensiblement circulaire, la section transversale (4) sensiblement circulaire présentant un diamètre (5) de 0,15 mm à 0,45 mm.

3. Pneu (11) selon la revendication 1 ou 2, **caractérisé en ce que** l'au moins une antenne (3) suit la forme d'une hélice (6).

4. Pneu (11) selon la revendication précédente, **caractérisé en ce qu'**une longueur d'extension (7) de l'hélice (6) est de 13 mm à 30 mm.

5. Pneu (11) selon l'une des revendications 3 ou 4, **caractérisé en ce qu'**un diamètre (8) de l'hélice (6) est compris entre 0,9 mm et 1,9 mm.

6. Pneu (11) selon l'une des revendications précédentes, **caractérisé en ce qu'**un nombre d'enroulements de l'hélice (6) le long d'un axe d'enroulement (9) de l'hélice (6) est de 10 à 16 par 10 mm de longueur d'enroulement (10) de l'hélice (6).

7. Pneu (11) selon l'une des revendications précédentes, **caractérisé en ce qu'**au moins un composant capteur (14) est relié au composant de mémoire (2), l'au moins un composant capteur (14) étant prévu pour détecter une grandeur d'état physique.
